# EUROPEAN PATENT SPECIFICATION

(11) **EP 0 888 710 B1**
(45) Date of publication and mention of the grant of the patent: **11.09.2002**
(21) Application number: 98202199.0
(22) Date of filing: 30.06.1998
(51) Int. Cl.: A01J 25/16, A01J 25/13

(54) **Method for making blockshaped-cheese**
Verfahren zur Herstellung von blockförmigen Käse
Méthode de fabrication de fromage en forme de blocs

(30) Priority: 04.07.1997 NL 1006488
(43) Date of publication of application: 07.01.1999
(73) Proprietor: Baars Leerdam Productie B.V., 4145 ZG Schoonrewoerd (NL)
(72) Inventor: Muijlwijk, Cornelis Marinus, 4147 AB Asperen (NL)
(74) Representative: de Bruijn, Leendert C.

(56) References cited:
- EP-A- 0 617 886
- CA-A- 877 768
- NL-A- 8 104 797

## Description

The invention relates to a method for making block-shaped cheeses of a type which, during the ripening phase, exhibits considerable and rapid gas evolution as a result of propionic acid fermentation, in particular cheeses of the Maasdammer type, the block-shaped cheeses, after having been removed from a brine bath, being packaged in a plastic film of limited gas permeability and then being subjected to the ripening process, including warm-room curing.

The ripening process of Maasdammer cheese usually resembles the following: after the cheese has been removed from the brine bath, the cheese is stored at a temperature of approximately 12 to 14°C for approximately 12 days in a pre-ripening phase. In a subsequent warm-room curing phase, the temperature is increased for approximately 14 days to approximately 18-21°C. In the post-ripening phase, the cheeses are stored further while being cooled to ultimately approximately 8°C (5-10°C), the cheese being removed from the brine for a total of at least 35 days.

Depending on the method of preparation and the propionic acid culture, variants to this process are possible. During the warm-room curing phase, the lactic acid is fermented by the activated propionic acid culture to form propionic acid, acetic acid, carbon dioxide and water. Within a short time, an excess carbon dioxide pressure is produced, causing the formation of holes in the cheese and expansion of the cheese. This expansion can lead to unacceptable defects in shape (cracks, sagging, irregular holes). Maasdammer cheese in particular is very sensitive to this, since its rind is thin and its moisture content is high.

Dutch Patent No. 180,898 (FR-A-8217726) has described a method for making round Maasdammer cheeses in which, in order to keep the cheese in check during the warm-room curing phase, use is made of a sleeve made from tea-bag paper. Although the cheeses do swell to some extent, the sides remain flat and retain the same height. The formation of elongate holes is prevented.

It will be clear that avoiding shape defects during the ripening of block-shaped Maasdammer cheese cannot be achieved using a sleeve made of tea-bag paper, but rather that this problem will have to be solved in some other way.

Block-shaped cheese is important above all for cutting into slices. In order to be able to cut a round cheese into slices, the said cheese has to be cut into three so-called slabs, each with a width of approximately 10 cm, in which case slices of approximately 10 cm wide by approximately 13 cm high have to be cut from the said slabs. This method would lead to 25 to 35% waste, which is clearly too much. It is generally known with Gouda cheese to use the so-called Eurocheese block, which has a longitudinal dimension of 500 mm, a width dimension of 300 mm and a height dimension of 120 mm. In order to be able to cut slices of approx. 12 x approx. 10 cm from such a block, the block firstly has to be cut into three pieces in the longitudinal direction. If such a block were to be made from Maasdammer cheese, there would be the drawback that the middle one of the three pieces would have many more holes than the other two pieces. Moreover, the swelling of the block of cheese caused by the propionic acid fermentation will cause the top and bottom faces of the block to swell, so that the lengths of the slices would differ too much with respect to one another. This has to be corrected by trimming to a length of approximately 14 cm. This causes approximately 18% waste, which is also too much.

The object of the invention is to eliminate the abovementioned problems and to avoid drawbacks and to provide a method as indicated in the preamble in which blocks of cheese without shape defects are produced, from which blocks slices with dimensions of approximately 12.5 x approximately 10 cm can be cut with at most 8% waste.

According to the invention, the method given in the preamble is characterized in that
- the block-shaped, film-packaged cheeses, in the unripened state, have a width dimension of approximately 240 mm (210-270 mm) and a height dimension of approximately 95 mm (80-110 mm),
- each of the cheeses - after having been packaged in a gas-permeable plastic film - is accommodated during the ripening phase in a box which is closed off by a lid and has the following internal cross-sectional dimensions: width approximately 250 mm (210-280 mm) and height approximately 100 mm (85-115 mm), the base, the lid and the long side walls; and the connections between them, of which box are designed to be sufficiently robust and strong for them to be able to withstand the forces resulting from expansion of the cheese caused by the evolution of gas.

From each block formed, it is possible to cut two halves with a width of approximately 125 mm (105-140 mm) and a height of approximately 100 mm (85-115 mm), from which it is possible to cut slices with dimensions of approximately 125 mm (105-140 mm) x approximately 100 mm (85-115 mm). The length is, for example, 500 mm. The slices have a uniform pattern of holes and are of a uniform size. It is of considerable economic importance that the block-shaped cheeses are not turned. The cheese is held in check in the box, and only the short sides of the cheese can swell without hindrance. The waste percentage is limited to at most 8%. Since the slices have essentially uniform dimensions with a strong edge on three sides, they can be packaged in plastic film with a minimum number of stoppages. In other words, the packaging process for the cheese slices is entirely, or virtually, continuous. Handling of the cheeses is uniform. No time is lost with cutting the blocks of cheese to size. The efficiency is improved considerably by utilizing the invention. The weight of the slices is also uniform and contributes to a more stable cutting and weighing process.

The lids of the boxes must be locked sufficiently strongly onto the boxes for the cheese to be held in check during the warm-room curing period. To this end, it is possible for various cheese-filled boxes to be stacked and for steel or plastic strips to be wrapped around the stack formed in this way. In fact, in this way it is possible to subject a large number of cheeses, which are arranged in boxes which are stacked on pallets, to the ripening simultaneously.

Another possibility is for the lids to be fixed to the boxes by means of clips, in which case the clips are arranged in such a manner that they can become detached in the event of a certain force being exceeded.

The invention also relates to a box for the ripening of a block-shaped cheese, which box has the following internal cross-sectional dimensions: width approximately 250 mm (210-280 mm) and height approximately 100 mm (85-115 mm). The box can be closed off by means of a lid.

The base, the lid and the long side walls may be reinforced by a pattern of ribs which are at right angles to one another.

The lid may be provided on the longitudinal edges with bearing blocks for the hinged attachment of clips, each with a projecting section which, in the closed and locked position, engages on the bottom surface of a horizontal side wall of the box. In the event of a certain force being exceeded, the clips can become detached. For example, the rib on which the clip engages in the locked position may be of relatively thin and deformable design.

The transverse ribs on the base, the box and the lid are arranged in greater numbers per unit length in the longitudinal centre region than in the remaining region, because the greatest forces during the warm-room curing of the cheeses occur in the longitudinal centre region.

The invention will now be explained in more detail with reference to the figures, in which:
Figure 1 shows a perspective view of a box with cheese and lid in the exploded state.
Figure 2 shows a view of the short side of two boxes which are stacked on top of one another.
Figure 3 shows a perspective view of the base of a box.
Figure 4 shows a perspective view of a cheese which has been ripened in a box and has been cut in two, and from which slices have been cut.

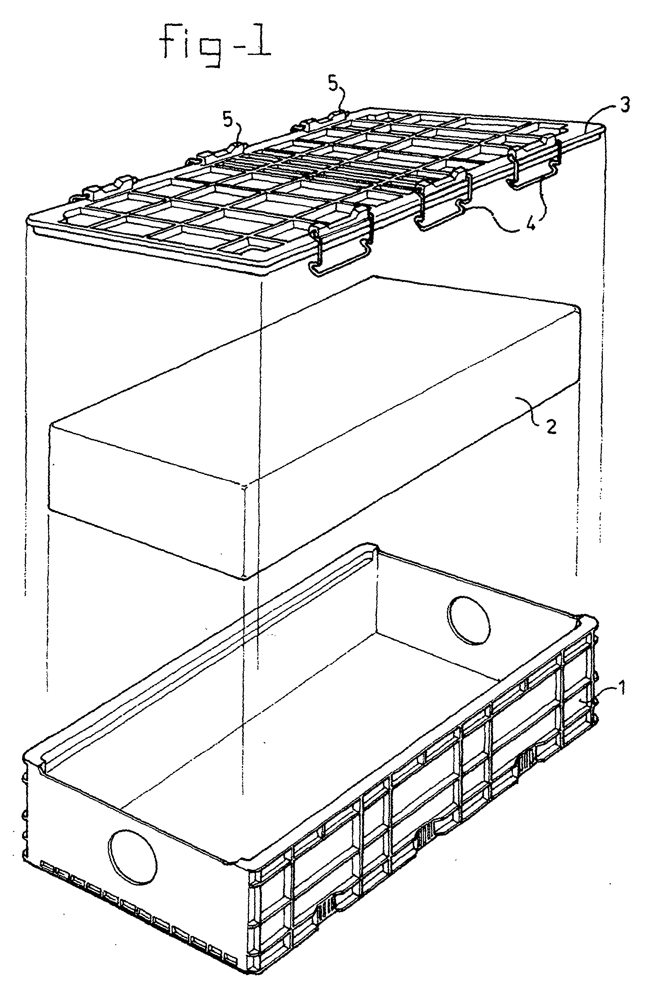

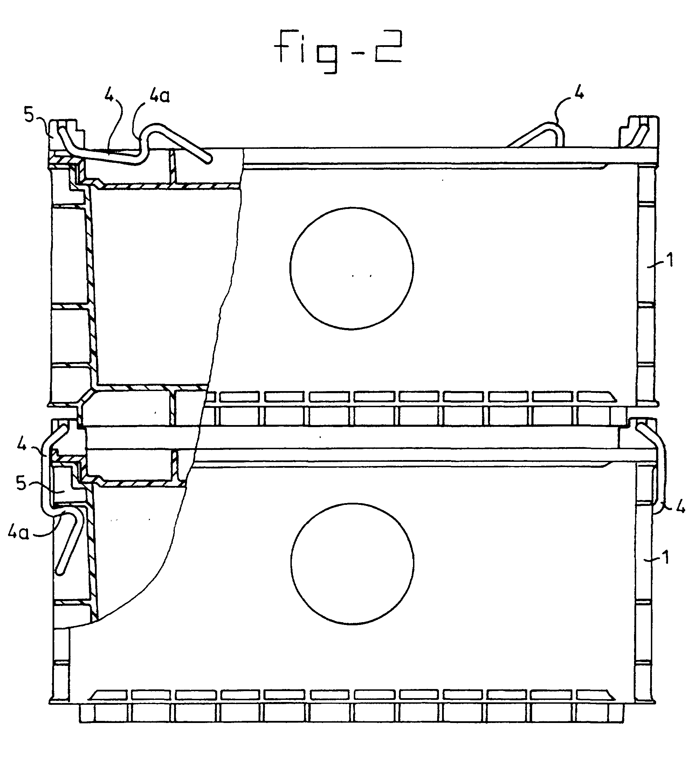

The box illustrated in Figures 1 to 3 is intended for ripening block-shaped cheese of the Maasdammer type, the cheese being kept in check during the expansion caused by propionic acid fermentation during the warm-room curing in such a manner that the shape of the finished block of cheese has the desired dimensions and the block of cheese does not exhibit any shape defects. Furthermore, the internal dimensions of the box are selected in such a way that the finished, ripened cheese has dimensions which are suitable for cutting slices therefrom. The percentage of waste is limited to a minimum. The box illustrated is made from a rigid plastic, for example polypropylene.

In the figures, the box is denoted by 1, the cheese which is ripened therein is denoted by 2 and the lid of the box is denoted by 3.

The base, the lid and the two long side walls of the box 1 are provided on the outside with strengthening/reinforcement ribs. These parts are relatively thick. By way of example, the thickness of the long side walls is approximately 25 mm and that of the base and the lid is approximately 20 mm. The short side walls of the box are of thin and flexible design and could also be omitted.

The internal dimensions of the box are as follows: length approximately 510 mm (or shorter or longer), width approximately 250 mm (210-280 mm) and height approximately 100 mm (85-115 mm). The external dimensions are: length approximately 515 mm, width approximately 300 mm and height approximately 123 mm.

An unripened block of cheese of the Maasdammer type, or at least of the type which undergoes explosive gas evolution as a result of propionic acid fermentation during the warm-room curing, which has been removed from a brine bath, is placed in the box. The dimensions of the unripened block of cheese are: length approximately 490 mm, width approximately 240 mm (210-270 mm) and height approximately 95 mm (80-110 mm).

Then, a lid is attached to the box 1, for example by means of the clips 4, the inwardly directed ends of which are hingedly attached in bearing blocks 5, with their bent-over parts 5a being able to clamp beneath a horizontal, relatively thin rib 6 of a long side wall of the box.

The engagement on the thin, relatively flexible rib is such that, in the event of a force exerted by the cheese on the lid from within being exceeded, the clip can become detached, so as to prevent further damage to the box in question.

Before placing an unripened block of cheese which has been removed from the brine bath in the box, the said block is surrounded by a gas-permeable film. In order to remove air between cheese and film, it is possible to operate under vacuum. After the block has been placed in the box, the lid 3 is attached to the box by means of the clips 4. After a pre-ripening phase of approximately 12 days at a temperature of approximately 12-14°C, the so-called warm-room curing phase is commenced by raising the temperature to approximately 18-20°C. In the post-ripening phase, the temperature is reduced to approximately 8°C. During the warm-room curing, a considerable quantity of carbon dioxide is released in a more or less explosive manner, leading to the formation of holes and to the expansion of the block of cheese. The result is that the top wall of the block of cheese moves up against the bottom surface of the lid and exerts pressure on the lid. The narrow end walls of the block of cheese have swollen up, since the narrow end walls of a box are at a sufficient distance (approximately 5 mm) from the block of cheese not to come into contact therewith. These end walls may also be omitted.

As stated above, in the event of a certain level of force exerted by the block of cheese on the bottom surface of the lid being exceeded, the clips will become detached.

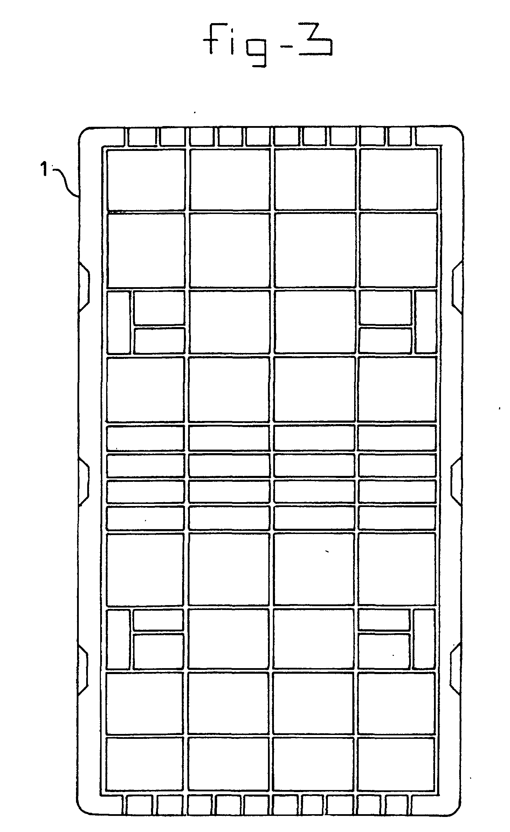

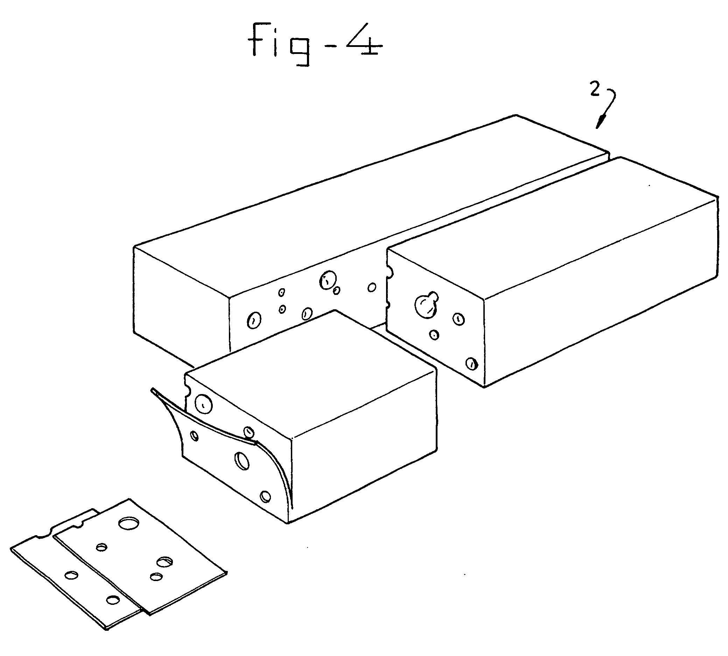

The ripened block of cheese is removed from the box, the film is taken off and, as shown in Figure 4, the block is cut in two in the longitudinal direction. Each of the two slabs formed in this way has a length of approximately 500 mm, a width of approximately 125 mm (105-140 mm) and a height of approximately 100 mm (85-115 mm). The slices cut from such a slab are of approximately 125 x 100 mm and can be packaged immediately in a film which, for example, has a standard width of 100 mm. The slices exhibit a uniform pattern of holes and the waste percentage lies at most at 8%.

Since the pressure on the base and on the lid during the warm-room curing is greater in the centre region than at the side parts, the transverse ribs in the longitudinal centre region lie closer together than at the side parts. The invention is not limited to Maasdammer cheese, but rather also extends to cover other cheeses which undergo explosive gas formation during ripening as a result of propionic acid fermentation, such as immature Emmenthaler.

The most important advantages of the invention are:
- the percentage of cutting waste is low (at most 8%),
- the distribution of the holes in the slices cut from a block of cheese is essentially uniform for the slices,
- the dimensions of the slices cut from a block of cheese are essentially uniform, with the result that the said slices can be packaged in film in a continuous process,
- the cheese does not have to be turned during ripening.

Instead of attaching the lids to the boxes using clips, it is also possible to stack a number of boxes with loose lids on top of one another and then to wrap steel or plastic strips around the stack. It is thus possible to load a pallet which is moved into the ripening rooms.

## Claims

1. Method for making block-shaped cheeses of a type which, during the ripening phase, exhibits considerable and rapid gas evolution as a result of propionic acid fermentation, in particular cheeses of the Maasdammer type, the block-shaped cheeses, after having been removed from a brine bath, being packaged in a gas-permeable plastic film and then being subjected to the ripening process, including warm-room curing,
**characterized**
- **in that** the block-shaped, film-packaged cheeses, in the unripened state, have a width dimension of approximately 240 mm i.e. in the range of 220-270 mm and a height dimension of approximately 95 mm i.e. in the range of 80-110 mm,
- **in that** each of the cheeses - after having been packaged in a plastic film of limited gas permeability - is accommodated during the ripening phase in a box which is closed off by a lid and has the following internal cross-sectional dimensions: width approximately 250 mm i.e. in the range of 220-280 mm and height approximately 100 mm i.e. in the range of 85-115 mm, the base, the lid and the long side walls, as well as the connections between them, of which box are designed to be sufficiently robust and strong for them to be able to withstand the forces resulting from expansion of the cheese caused by the evolution of gas.

2. Method according to Claim 1, **characterized in that** various cheese-filled boxes are stacked and steel or plastic strips are wrapped around the stack formed in this way.

3. Method according to Claim 1, **characterized in that** the lids are fixed to the boxes by means of clips.

4. Method according to Claim 3, **characterized in that** the clips are arranged in such a manner that they can become detached in the event of a certain force being exceeded.

5. Box for the ripening of a block-shaped cheese in accordance with the method of Claim 1, **characterized in that** the box has the following internal cross-sectional dimensions: width approximately 250 mm i.e. in the range of 220-280 mm, height approximately 100 mm i.e. in the range of 85-115 mm, and **in that** the box can be closed off by means of a lid.

6. Box according to Claim 5, **characterized in that** the base, the lid and the long side walls are reinforced by a pattern of ribs which are at right angles to one another.

7. Box according to Claim 6, **characterized in that** the lid is provided on the longitudinal edges with bearing blocks for the hinged attachment of clips, each with a projecting section which, in the closed and locked position, engages on the bottom surface of a horizontal rib on a side wall.

8. Box according to Claim 6 or 7, **characterized in that** the clips become detached in the event of a certain force being exceeded.

9. Box according to Claim 6, 7 or 8, **characterized in that** the transverse ribs on the base, the box and the lid are arranged in greater numbers per unit length in the longitudinal centre region than in the remaining regions.

## Patentansprüche

1. Verfahren zur Herstellung von blockförmigen Käse eines Typs, der, während der Reifungsphase, als Ergebnis der Propionsäurefermatation eine beträchtliche und schnelle Gasentwicklung zeigt, insbesondere Käse des Maasdammertyps, wobei die blockförmigen Käse nach der Entfernung aus einem Kochsalzbad in eine gasdurchlässige Kunststofffolie verpackt werden und dann dem Reifungsprozess, wozu die Warmraumhärtung gehört, unterzogen werden, **dadurch gekennzeichnet, dass**
- die blockförmigen, folienverpackten Käse im unreifen Zustand eine Breitenausdehnung von etwa 240 mm, d.h. im Bereich von 220 bis 270 mm und eine Höhenausdehnung von etwa 95 mm, d.h. im Bereich von 80 bis 110 mm, aufweisen,
- jeder Käse - nach der Verpackung in einer Kunststofffolie mit eingeschränkter Gasdurchlässigkeit - während der Reifungsphase in einer Schachtel untergebracht wird, die mit einem Deckel verschließbar ist und folgende Querschnittsausdehnungen in ihrem Innenraum aufweist: eine Breite von etwa 250 mm, d.h. in einem Bereich von 220 bis 280 mm und eine Höhe von etwa 100 mm, d.h. in einem Bereich von 85 bis 115 mm, wobei der Boden, der Deckel und die langen Seitenwände der Schachtel sowie die Verbindungen dazwischen so ausgestaltet sind, dass sie ausreichend widerstandsfähig und stark sind, um den Kräften, die aus der Ausdehnung des Käses aufgrund der Gasentwicklung entstehen, widerstehen zu können.

2. Verfahren nach Anspruch 1, **dadurch gekennzeichnet, dass** verschiedene käsegefüllte Schachteln gestapelt werden und Stahl- oder Kunststoffstreifen um den Stapel, der in dieser Weise gebildet wurde, gewickelt werden.

3. Verfahren nach Anspruch 1, **dadurch gekennzeichnet, dass** die Deckel an die Schachteln mit Klammern befestigt werden.

4. Verfahren nach Anspruch 3, **dadurch gekennzeichnet, dass** die Klammern in der Weise angeordnet werden, dass sie abgelöst werden können, in dem Fall, wenn eine bestimmte Kraft zu stark wird.

5. Schachtel für die Reifung eines blockförmigen Käses nach dem Verfahren von Anspruch 1, **dadurch gekennzeichnet, dass** die Schachtel folgende Querschnittsausdehnungen in ihrem Innenraum aufweist: eine Breite von etwa 250 mm, d.h. in einem Bereich von 220 bis 280 mm, eine Höhe von etwa 100 mm, d.h. in einem Bereich von 85 bis 115 mm und dass die Schachtel mit einem Deckel zu verschließen ist.

6. Schachtel nach Anspruch 5, **dadurch gekennzeichnet, dass** der Boden, der Deckel und die langen Seitenwände durch ein Muster aus Rippen verstärkt sind, die im rechten Winkel zueinander stehen.

7. Schachtel nach Anspruch 6, **dadurch gekennzeichnet, dass** der Deckel auf den Längskanten mit Lagerblocks für die schwenkbare Befestigung der Klammern vorgesehen ist, wobei jede einen überhängenden Bereich aufweist, der, in verschlossener und verriegelter Position, auf der Bodenoberfläche einer horizontalen Rippe auf einer Seitenwand eingreift.

8. Schachtel nach Anspruch 6 oder 7, **dadurch gekennzeichnet, dass** sich die Klammern in dem Fall lösen, wenn eine bestimmte Kraft zu stark wird.

9. Schachtel nach Anspruch 6, 7 oder 8, **dadurch gekennzeichnet, dass** die Querrippen am Boden, der Schachtel und am Deckel in größerer Anzahl pro Längeneinheit im Längsmittelbereich als in den verbleibenden Bereichen angeordnet sind.

## Revendications

1. Procédé pour fabriquer des fromages en forme de blocs d'un type qui, pendant la phase de mûrissage, présente un dégagement considérable et rapide de gaz par suite de la fermentation à l'acide propionique, en particulier des fromages de type Maasdammer, les fromages du type bloc, après avoir été retirés d'un bain de saumure, étant emballés dans un film en matière plastique perméable aux gaz et étant ensuite soumis au processus de mûrissage, comprenant le traitement en chambre chaude,
**caractérisé**
- **en ce que** les fromages en forme de blocs et emballés dans un film, à l'état non mûri, présentent une dimension en largeur d'approximativement 240 mm, c'est-à-dire dans la gamme de 220 à 270 mm, et une dimension en hauteur d'approximativement 95 mm, c'est-à-dire dans la gamme de 80 à 110 mm,
- **en ce que** chacun de ces fromages - après avoir été emballé dans un film en matière plastique à perméabilité aux gaz limitée - est logé pendant la phase de mûrissage dans une boîte fermée par un couvercle et qui présente les dimensions intérieures suivantes en section transversale : largeur d'approximativement 250 mm, c'est-à-dire dans la gamme de 220 à 280 mm, et en hauteur d'approximativement 100 mm, c'est-à-dire dans la gamme de 85 à 115 mm, la base, le couvercle et les parois latérales longues, ainsi que les liaisons entre eux, de cette boîte étant conçus pour être suffisamment robustes et résistants pour leur permettre de résister aux forces résultant de la dilatation du fromage provoquée par le dégagement de gaz.

2. Procédé selon la revendication 1, **caractérisé en ce que** plusieurs boîtes remplies de fromage sont empilées et **en ce que** des bandes en acier ou en matière plastique sont enroulées autour de l'empilement formé de cette façon.

3. Procédé selon la revendication 1, **caractérisé en ce que** les couvercles sont fixés aux boîtes au moyen de pinces.

4. Procédé selon la revendication 3, **caractérisé en ce que** les pinces sont agencées de telle façon qu'elles puissent se détacher dans le cas où une force déterminée est dépassée.

5. Boîte pour le mûrissage d'un fromage en forme de bloc selon le procédé de la revendication 1, **caractérisée en ce que** la boîte présente les dimensions internes suivantes en section transversale : largeur d'approximativement 250 mm, c'est-à-dire dans la gamme de 220 à 280 mm, hauteur d'approximativement 100 mm, c'est-à-dire dans la gamme de 85 à 115 mm, et **en ce que** la boîte peut être fermée au moyen d'un couvercle.

6. Boîte selon la revendication 5, **caractérisée en ce que** la base, le couvercle et les parois latérales longues sont renforcés par un réseau de nervures qui sont à angle droit les unes par rapport aux autres.

7. Boîte selon la revendication 6, **caractérisée en ce que** le couvercle est muni sur les bords longitudinaux de blocs de palier pour la fixation à charnière des pinces, chacune avec une partie en saillie qui, dans la position fermée et verrouillée, vient en contact avec la surface de fond d'une nervure horizontale sur une paroi latérale.

8. Boîte selon la revendication 6 ou 7, **caractérisée en ce que** les pinces sont susceptibles de se détacher dans le cas où une force déterminée est dépassée.

9. Boîte selon la revendication 6, 7 ou 8, **caractérisée en ce que** les nervures transversales sur la base, la boîte et le couvercle sont disposées en plus grand nombre par unité de longueur dans la zone centrale que dans les zones restantes.
